# EUROPEAN PATENT SPECIFICATION

(11) **EP 1 767 960 B1**
(45) Date of publication and mention of the grant of the patent: **15.10.2008**
(21) Application number: 06003514.4
(22) Date of filing: 21.02.2006
(51) Int. Cl.: G01S 13/93, G08G 1/16, G01S 17/42

(54) **Front image taking device**
Vorrichtung zur Aufnahme von Bildern vor dem Fahrzeug
Dispositif pour faire d'images de l'avant d'un vehicule

(30) Priority: 27.09.2005 JP 2005280531
(43) Date of publication of application: 28.03.2007
(73) Proprietor: OMRON CORPORATION, Kyoto-shi, Kyoto 600-8530 (JP)
(72) Inventor: Horibe, Koji c/o Omron Corporation, Shiokoji-dori, Shimogyo-ku, Kyoto-shi Kyoto 600-8530 (JP)
(74) Representative: Kilian, Helmut

(56) References cited:
- DE-A1- 19 629 775
- US-B1- 6 191 704
- US-B1- 6 590 521

## Description

### Background of the Invention

This invention relates to a device, herein referred to as front image taking device, for taking an image in front of an automobile and in particular to such a device adapted to set conditions of its image-taking according to the condition of a target object of which the image is being taken.

For the purpose of maintaining the safe operating condition of an automobile, it has been known to detect the distance to the front going automobile by means of a laser radar. If the distance to the front going automobile detected by the laser radar is found to be abnormally short, an alarm may be outputted to draw the attention of the driver. In order to further improve the safe operating condition, however, it is coming to be desired to also detect distances to other objects such as pedestrians. Although a laser radar is capable of detecting the distance as well as the direction to an object in a short time, it finds it difficult to determine whether a detected object is an automobile or a pedestrian.

In order to determine the kind of a detected object, it has been known to take an image of the front of the automobile by using a CCD camera or the like and to carry out an image processing to judge whether the detected object is an automobile or a pedestrian. Although it is possible by an image processing by means of a camera to accurately determine whether a detected object is an automobile or a pedestrian, it is not possible to accurately determine the distance to it and it takes a long time for its processing. For this reason, it has become known to use a laser radar to determine the presence of an object and to detect the distance to it and to determine the kind of the detected object by obtaining a camera image and carrying out an image processing.

There are problems that arise, however, when it is attempted to determine the kind of a detected object by image processing of the type described above. For example, if the front going automobile enters a tunnel while the automobile to which the device is mounted (hereinafter referred to as the own automobile) is approaching it in front of it, the image of the area including the front going automobile becomes too dark and hence the front going automobile may become unrecognizable, or become lost, even after an image processing is attempted. Similarly, if the front going automobile runs out of a tunnel while the own automobile is still inside, the image of the area including the front going automobile becomes too bright and the front going automobile may also become unrecognizable and lost.

In view of the above, Japanese Patent Publication Tokkai 7-81459, for example, proposed a device adapted to calculate an optimum iris value by using the image brightness of an area including the front going automobile and to use it to control the iris value of the camera for the time of obtaining the next image. With such a device capable of obtaining an image with an optimum exposure for an area around the front going automobile, there is no danger of losing sight of a front going automobile in such an area.

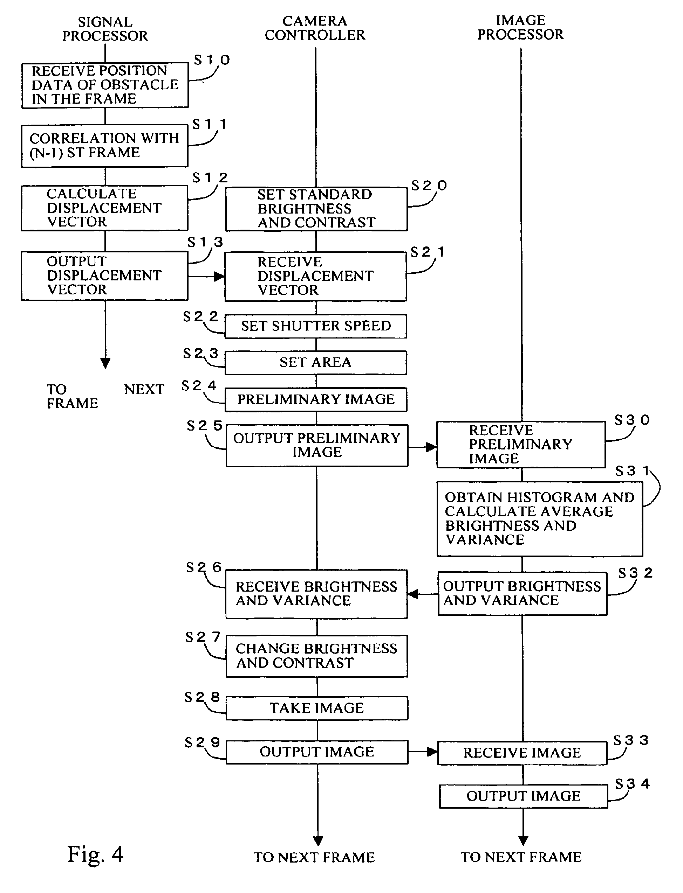

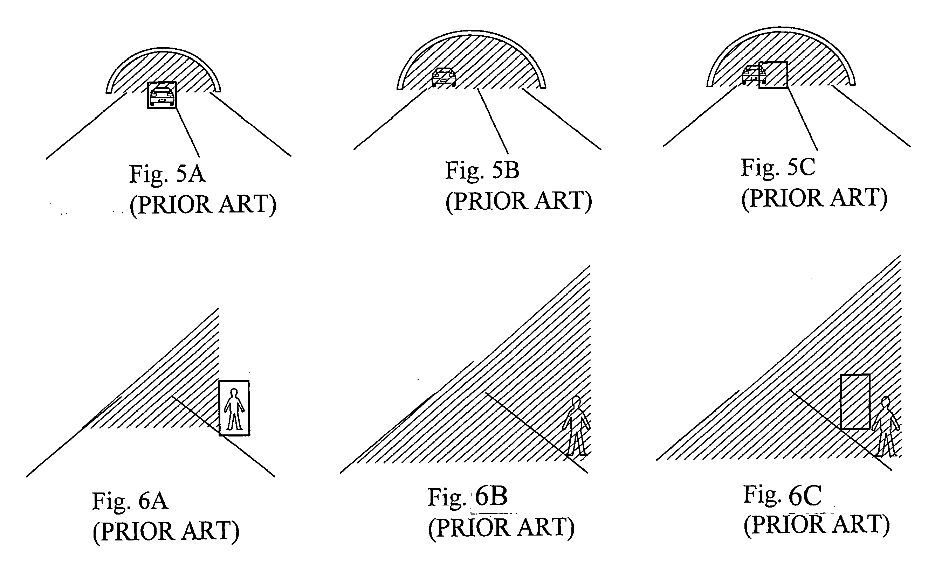

Such a device, however, still has problems. Consider a situation where a front going automobile is going into a tunnel. Suppose that the front going automobile is traveling on the right-hand side of the lane on which the own automobile is traveling, as shown in Fig. 5A, immediately before entering an tunnel. Suppose, however, that the same front going automobile shifts to the left-hand side of the same traffic lane , immediately after entering the tunnel, as shown in Fig. 5B. At the moment of Fig. 5A, since the front going automobile is noted on the right-hand side of the traffic lane, it is an area around this right-hand side of the traffic lane that an iris value is set as an optimum value. As the front going automobile enters the tunnel as shown in Fig. 5B, an new iris value is calculated as shown in Fig. 5C in the area set in Fig. 5A because the image becomes darker. Since the front going automobile has moved to the left-hand side immediately after entering the tunnel, however, it is no longer within the area set as shown in Fig. 4A. Since the device according to Japanese Patent Publication Tokkai 7-81459 uses the previously selected iris control area if the front going automobile cannot be identified, this means that the front going automobile is lost sight of.

Next, let us consider a situation where the detected object is a pedestrian. Fig. 6A shows an image taken immediately before the pedestrian enters a shadow area of a building and Fig. 6B is another image taken immediately after the pedestrian has entered the shadow area. In Fig. 6A, the pedestrian is noted on the right-hand side of the road and the iris value is set so as to be optimum with reference to the surrounding area. As the pedestrian enters the shadow area, since the image becomes darker, the iris value is calculated again as shown in Fig. 6C in the same area as set in Fig. 6A. Since the speed of motion of the pedestrian is much slower than that of the own automobile, the relative position of the pedestrian changes significantly unless the speed of the own automobile is very slow. Thus, the pedestrian is no longer in the same area set in Fig. 6A, as shown in Fig. 6C. In this situation, too, an optimum iris value cannot be set. Since the device according to Japanese Patent Publication Tokkai 7-81459 is adapted to use the previously set iris control area unchanged if the front going automobile cannot be detected, this means that the front going automobile remains lost sight of.

As still another example, if the front going automobile is dirty and an image is taken thereof, the boundary between its glass portion and its body or the boundary between a tail lamp and its body may not be clear. Even if an edge detection step is carried out in the processing of an image taken of such an automobile, an edge judgment will not be possible because of the unclear boundary line. Although the device according to Japanese Patent Publication Tokkai 7-81459 is adapted to carry out iris control, the iris control involves only the adjustment of brightness and is not capable of adjusting contrast. In other words, edge detection cannot be effectively carried out in the case of an object with unclear boundary lines such as a dirty automobile.

A front image taking device according to the preamble of claim 1 is known from US-B1-6 590 521.

### Summary of the Invention

It is therefore an object of this invention to provide a front image taking device capable of setting its image-taking conditions according to the condition of a target object of which the image is being taken although the position of the target object may change.

A front image taking device according to this invention is as defined in claim 1. Since the image-taking conditions of the camera are set individually for each of the image-taking areas that are determined according to the obstacles detected by the laser scan device, the image-taking conditions can be set optimally.

The invention may be further characterized wherein the laser scan device serves to measure distance and direction to each of the detected obstacles and wherein the camera controller sets the image-taking area according to the distance and the direction to the detected obstacle. Thus, the image-taking area is set narrower if it is far and wider if it is near.

The invention may be still further characterized wherein the laser scan device determines relative displacement of each of the detected obstacles based on results of previous scan and present scan and wherein the camera controller estimates position of the detected obstacle at the next time of taking image based on the relative displacement determined by the laser scan device and sets the image-taking area based on this estimated position. Thus, the scanning by the laser light and the image-taking by the camera can be carried out at the same time.

The camera controller may be further characterized as setting the shutter speed of the camera for the image-taking area according to the speed of motion of the detected obstacle. Thus, the shutter speed may be made faster if the detected obstacle is moving fast such that a clear image of the obstacle can be obtained.

The camera controller may be still further characterized as taking a preliminary image of the image-taking area before the next time of taking image and setting sensitivity or brightness for the image-taking area based on results of this preliminary image. Thus, the contrast can be changed according to the results of the preliminarily taken image and an image can be obtained under a further improved condition.

In the above, the camera may be a CMOS camera with a wide dynamic range. Thus, an overexposed or underexposed image is not likely to result.

According to this invention, an optimum image-taking conditions can be set according to the individual conditions of the detected obstacles in front.

### Brief Description of the Drawings

Fig. 1 is a block diagram of a front image taking device of this invention.
Figs. 2A, 2B, 2C, 2D, 2E and 2F, together referred to as Fig. 2, are drawings for explaining displacement vectors.
Figs. 3A, 3B, 3C, 3D, 3E and 3F, together referred to as Fig. 3, are drawings for explaining histograms.
Fig. 4 is a flowchart of the front image taking operations.
Figs. 5A, 5B and 5C are images taken of a front going automobile entering a tunnel by a prior art front image taking device.
Fig. 6A, 6B and 6C are images taken of a pedestrian entering a shadow area by a prior art front image taking device.

### Detailed Description of the Invention

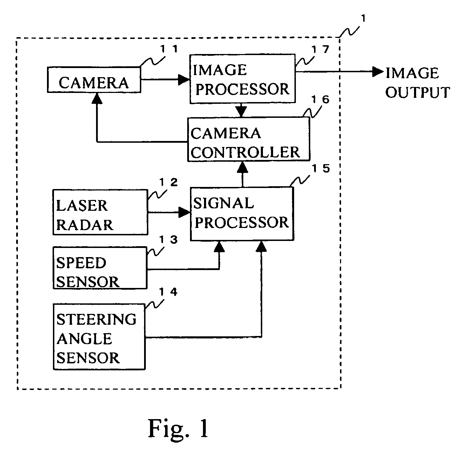

The invention is described next with reference to drawings. Fig. 1 is a block diagram of a front image taking device 1 embodying this invention, comprising a camera 11, a laser radar 12, a (vehicular) speed sensor 13, a steering angle sensor 14, a signal processor 15, a camera controller 16 and an image processor 17. The camera 11 is connected to the camera controller 16 and the image processor 17. The laser radar 12, the speed sensor 13 and the steering angle sensor 14 are connected to the signal processor 15. The signal processor 15 is connected to the camera controller 16, and the camera controller 16 is connected to the image processor 17.

The camera 11 is set at a front portion of the automobile, such as inside the front glass (or behind the rear view mirror), and is adapted to take an image of the front of the automobile, continuously or intermittently obtaining images and outputting the images thus obtained to the image processor 17. The camera 11 is preferably a CMOS camera with a wide dynamic range adapted to slowly increase the output value at each image element logarithmically as brightness increases. With such a camera, an object in an extremely light area in the sun and a dark object in a shadow can be photographed simultaneously. In other words, the front of the automobile becomes very bright during a day while its brightness drops to a very low value at night but a CMOS camera with a wide dynamic range has a wider dynamic range than a human eye and there is no fear of obtaining an overexposed or underexposed image.

The camera 11 is of a so-called multi-windowing CMOS camera, capable of selecting a plurality of specified areas out of the image-taking range and setting individual image-taking conditions for these specified areas. With such a camera, sensitivity, etc. can be individually set for each image element, that is, different image-taking conditions can be set for specified areas.

The laser radar 12 is for projecting near-infrared rays to the front of the automobile and detecting an obstacle by receiving reflected light by means of a photodiode or the like. The range of scan by the laser radar 12 is approximately the same as the image-taking range of the camera 11. The laser radar 12 is set on a front part of the automobile such as inside the front grill (or the front bumper) such that its scan range becomes nearly the same as the image-taking range of the camera 11.

The laser radar 12 is also adapted to measure the reflection intensity of the laser light reflected in front of the automobile. When the measured reflection intensity exceeds a preliminarily set level, the laser radar 12 concludes that an obstacle has been detected. The laser radar 12 also serves to measure the timing of laser emission and the delay timing of the light reception and to measure the distance to an obstacle from this delay. From the radiation angle of this time, the direction of the obstacle can also be judged if an angle sensor for measuring the angle of the laser radiation emission is included.

The speed sensor 13 is a sensor for measuring the speed of the own automobile and the steering angle sensor 14 is for detecting the steering angle of the own automobile, that is, the change in the direction of travel of the own automobile. A yaw rate sensor may be substituted for the steering angle sensor 14. The direction and distance data of an obstacle detected by the laser radar 12, the travel speed data detected by the speed sensor 13 and the steering angle data detected by the steering angle sensor 14 are inputted to the signal processor 15.

The signal processor 15 serves to extract a displacement vector for each obstacle detected by the laser radar 12 based on these data. The displace vector contains data that shows the displacement of each obstacle during the operation time corresponding to one frame of the laser radar 12 (or the time of one scan). Each displacement vector is inputted to the camera controller 16.

The camera controller 16 serves to set various image-taking conditions for the camera 11, such as the shutter speed, contrast (sensitivity of image elements) and brightness (offset). It can select any areas out of the range of the camera 11 and set image-taking conditions individually for different ones of these selected areas. These areas are set where obstacles are believed to exist within the range of the camera 11, based on the displacement vectors received from the signal processor 15. Image-taking conditions are set individually for these set areas.

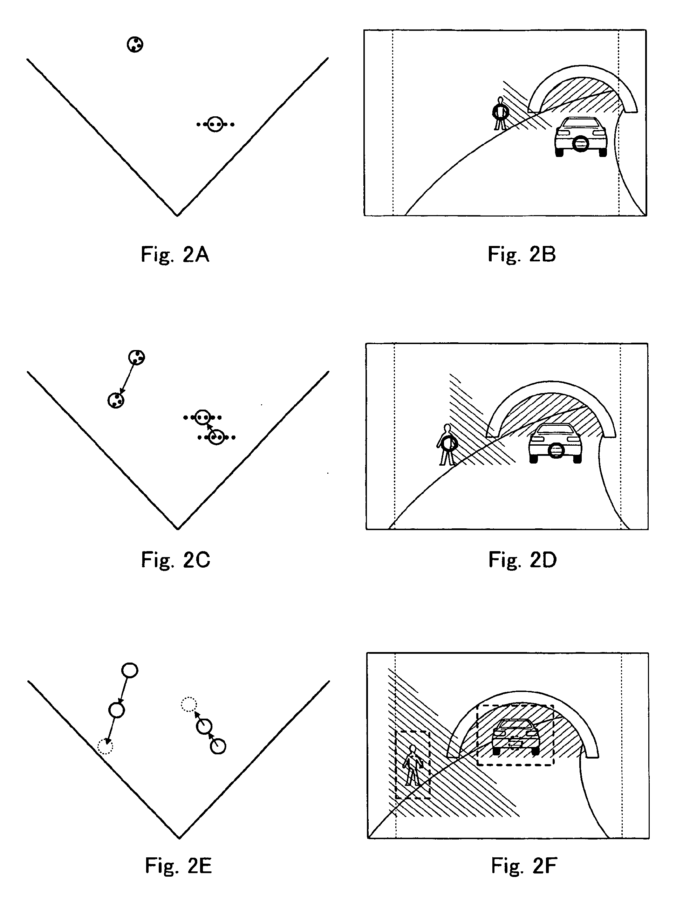

Fig. 2 is referenced next to explain displacement vectors, showing scan pictures of the laser radar 12 and images taken by the camera 11 as a pedestrian enters a shadow area of a building and a front going automobile enters a tunnel while shifting from the right-hand side to the left-hand side within the same traffic lane in front. Fig. 2A is the scan picture of the (n-1)st frame of the laser radar 12 and Fig. 2B is the image taken by the camera 11 at the same time as the picture of Fig. 2A (that is, at the timing of the (n-1)st frame of the laser radar 12). The scan picture of Fig. 2A shows that two obstacles have been detected within the scan range. The camera image taken simultaneously shows the corresponding two obstacles as a pedestrian and an automobile.

Fig. 2C is the scan picture of the nth frame of the laser radar 12 and Fig. 2D is the image taken by the camera 11 at the same time as the picture of Fig. 2C (that is, at the timing of the nth frame of the laser radar 12).

During the time period corresponding to one frame of the laser radar 12, that is, between the times of Figs. 2A and 2C, each of the obstacles moves with respect to the own automobile. Since the pedestrian's walking speed is much slower than the speed of the own automobile, the corresponding relative displacement is large and it is nearly entirely due to the motion of the own automobile. Since the front going automobile is running nearly at the same speed with the own automobile, the relative motion is small. In this example, since the front moving automobile is shifting from the right-hand side to the left-hand side of the traffic lane, its relative motion is somewhat to the left.

The signal processor 15 obtains a displacement vector for each obstacle detected by the laser radar 12, as shown in Fig. 2C. Based on the direction and distance data of the obstacles inputted from the laser radar 12, the travel speed data from the speed sensor 13 and the steering angle data from the steering angle sensor 14, the signal processor 15 obtains the relative speed and direction of each obstacle. Since the operating time of the laser radar 12 for one frame is always constant, the length of a displacement vector represents the speed of the obstacle, the direction of the displacement vector representing the direction of the relative motion.

Fig. 2E is the expected scan picture of the (n+1)st frame of the laser radar 12. Since the operating time of the laser radar 12 for one frame is constant, as explained above, the camera controller 16 anticipates the positions of the obstacles in the (n+1)st frame from the displacement vectors obtained from the nth and (n-1)st frames by extrapolation. Thus, the camera controller 16 sets condition-setting areas (for setting image-taking conditions) as shown in Fig. 2F at positions corresponding to these anticipated positions of the obstacles on the (n+1)st frame.

The image processor 17 is for analyzing images taken by the camera 11. Analyses of an image may be carried out either on the image as a whole or individually on each of selected areas. Firstly, a brightness distribution of the image taken by the camera 11 is obtained as a histogram. From such a histogram, an average brightness value and a variance value are obtained and the average and variance data are transmitted to the camera controller 16.

The camera controller 16 serves to set the image-taking conditions of the camera 11 over again from these average and variance data. This is done by adjusting the brightness such that the average brightness will come to the center of the histogram and the sensitivity such that the variance will become uniform over the histogram.

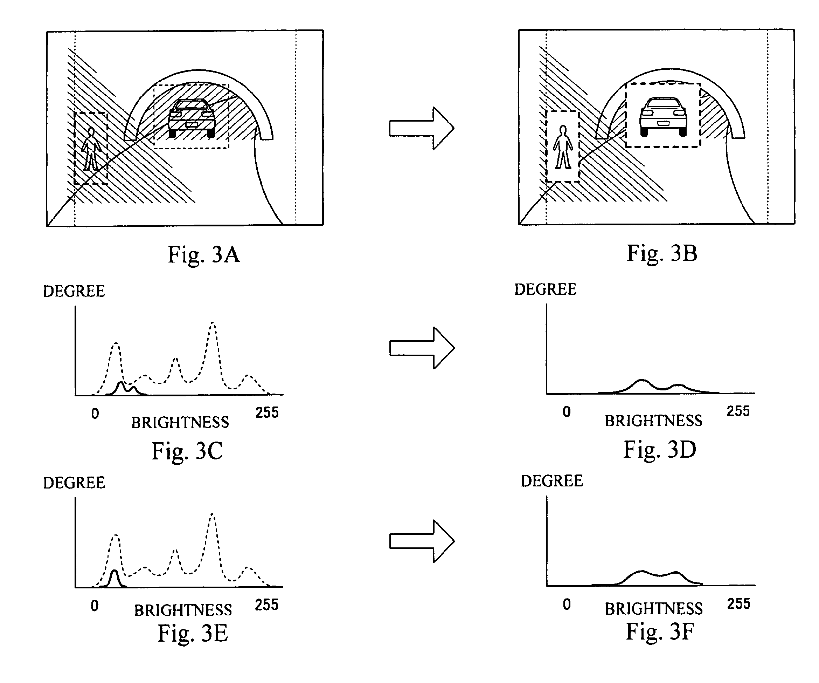

Fig. 3 shows the brightness histograms of the obstacles. Fig. 3A is the image taken by the camera 11 corresponding to the aforementioned (n+1)st frame. For taking this image, the camera controller 16 sets condition-setting areas at the anticipated positions of the obstacles. As this image is received, the image processor 17 obtains a histogram corresponding to each of areas around the obstacles. Fig. 3C is the histogram obtained for an area around the front going automobile, and Fig. 3E is the histogram obtained for an area around the pedestrian. In these histograms, broken lines represent the brightness distribution over the entire image taken by the camera 11.

The average and variance values are obtained from each of the histograms by the image processor 17. In Fig. 3C, the average value of the histogram of the front going automobile is low and its variance is small because the front going automobile is inside the tunnel. The average value of the histogram of the pedestrian in Fig. 3E is also small because the pedestrian is in the shadow of a building and its variance is also small. The average and variance values of the histogram of each area are transmitted from the image processor 17 to the camera controller 16.

For each of the areas of the obstacles, the camera controller 16 varies the brightness based on the average value that was received from the image processor 17. The change is made such that the average value comes to the center of the histogram. In other words, the image-taking conditions are changed so as to make is brighter if the average value is lower than the center of the histogram. The brightness of the image-taking conditions may be changed by varying the lens opening by servo means or by adjusting the shutter speed. The camera controller 16 also changes the contrast of each of the areas of the obstacles such that the variance will expand over the entire histogram. This may be effected by adjusting the gain of each image element.

After the image-taking conditions of the camera 11 are thus changed by the camera controller 16, images are taken by the camera 11 over again with the modified image-taking conditions. Fig. 3B shows an example of image thus obtained after the image-taking conditions have been changed for each area. It should be noted that both the front going automobile and the pedestrian are clearly shown although the former is already in the tunnel and the latter is in the shade of a building because the brightness and contrast have been adjusted in the areas of both. This image is inputted again to the image processor 17. Figs. 3D and 3F are histograms thus obtained from the image-setting areas of the front going automobile and the pedestrian, respectively.

Fig. 3D shows that the brightness is shifted in the direction of higher brightness because the shutter speed and/or the lens opening has been changed and also that the brightness distribution is extending farther in the direction of the higher brightness because the gain of each image element has been increased to improve the contrast. Similar changes are also seen in Fig. 3F compared with the histogram of Fig. 3E.

The aforementioned resetting of the image-taking conditions is effected during the period of operating time of the laser radar 12 corresponding to one frame. Explained more in detail, image-taking takes place twice during the operation of the laser radar 12 for the (n+1)st frame. The first image-taking is for a preliminary image from which the image processor 17 obtains histograms and the camera controller 16 operates to determine how to change the image-taking conditions of each condition-setting areas. Since the operating time of the laser radar 12 for one frame is relatively long, compared with the image-taking time of the camera 11, the time taken by the image processor 17 to calculate histograms or the time required by the camera controller 16 to reset the image-taking conditions, it is amply possible to take an image twice during this period.

An image thus obtained by the camera 11 under optimized image-taking conditions is transmitted from the image processor 17 to be utilized on the side of the automobile main body. For this purpose, an on-vehicle image processor (not shown), upon receiving such a transmitted image, may serve to carry out image processing such as edge detection to judge the kind of the obstacle from detected edges. If the obstacle is strongly symmetric in the right-left direction, it may be judged to be an automobile. Such data are transmitted, together with the direction and distance data of obstacles detected by the laser radar 12, to a controller of the automobile motion (not shown) for controlling the motion of the own automobile based on these received data such that a cruising control may be effected to control the speed of the own automobile at a constant rate, accelerating and decelerating the own automobile, for example, according to the acceleration and deceleration of the front going automobile. It naturally goes without saying that many different kinds of controls other than the cruise control may be effected. If the obstacle has been judged to be a pedestrian, for example, a sudden stopping control may be effected in order to avoid a contact.

With the front image taking device 1 thus structured, the positions of an obstacle detected by the laser radar 12 and photographed by the camera 11 match completely because the image in front is obtained at the same timing as the scan timing of the laser radar 12 such that the kind of the obstacle and its position can be highly accurately detected and hence that the aforementioned motion controls such as the sudden stopping control can be carried out more accurately.

Moreover, after an obstacle is detected by a laser radar and its positional displacement is anticipated, an image-taking area is set around the anticipated position of the obstacle. Thus, the image-taking condition of the camera can be adjusted optimally, instead of merely adjusting the contrast of an obtained image by image processing, and an optimum image can be obtained according to the conditions of the photographed objects (such as clarity of boundary lines).

When an image of an automobile covered with mud has been taken, furthermore, it is often difficult to detect edges because the boundary lines are usually unclear, for example, between its glass and body parts or between a tail lamp and a body part. Since the front image taking device 1 of this invention adjusts not only brightness but also contrast, images with a high contrast can be obtained and allow dependable edge detections.

Operations of the front image taking device 1 described above will be explained next with reference to Fig. 4 which shows a flowchart of its front image taking operations including the operations of detecting obstacles in front by the laser radar 12 and setting optimum image-taking conditions for the detected obstacles to take clear images of them.

As the signal processor 15 receives the results of the scan of the nth frame by the laser radar 12 and obtains position data of obstacles (Step S10), correlation is considered with each of the obstacles detected in the nth frame of the laser radar 12 (Step S 11). If the reflection intensity is about the same or the difference is less than a specified threshold value between the (n-1)st frame and the nth frame, they are considered to be the same obstacle. From the differences in the position between the (n-1)st frame and the nth frame, a displacement vector is calculated for each of the obstacles (Step S12) and the calculated displacement vectors are transmitted to the camera controller 16 (Step S 13).

The camera controller 16 sets standard brightness and contrast values to the camera 11 (Step S20). These are common values for the entire image-taking area but they may be set for each of the operation frames of the laser radar 12. Previously set conditions may be directly used as standard conditions to set the brightness and contrast.

As a displacement vector is received thereafter from the signal processor 15 (Step S21), the camera controller 16 sets the shutter speed of the camera 11 based on the received displacement vector (Step S22). If the displacement vector is long, since it leads to the conclusion that the obstacle is moving at a fast relative speed, a fast shutter speed is selected such that the obtained image will not be blurry. If the displacement vector is short, the shutter speed may be made slower in order to obtain enough light. If the camera 11 is a CMOS camera with a wide dynamic range, however, such a change of shutter speed may not be necessary because an underexposed or overexposed image is not likely to result.

The received displacement vector is used also for setting the position and the size of the image-taking area for which the image-taking conditions are to be changed (Step S23). If the displacement vector is long, the image area is made larger because the accuracy of anticipated position of the obstacle which is moving relatively fast between the frames is low. The size of the image-taking area may be changed according to the distance to the obstacle, the area being made smaller if the obstacle is far and larger if the obstacle is near.

After such image-taking conditions are set to the camera 11, a preliminary image is taken (Step S24) and the obtained preliminary image is outputted from the camera 11 to the image processor 17 (Step S25). Upon receiving the preliminarily obtained image (Step S30), the image processor 17 obtains a brightness histogram for each of the image areas containing an obstacle and calculates the average and variance values of brightness (step S31). The calculated values are then transmitted to the camera controller 16 (Step S32).

As the calculated brightness average and variance values are received (Step S26), the camera controller 16 changes the brightness and contrast of the image-taking conditions for the camera 11 (Step S27). As explained above, the brightness is changed by adjusting the shutter speed and/or the lens opening such that the average value will come to the center of the histogram and the contrast is changed by adjusting the sensitivity (amplification gain) of each image element such that the brightness variance will spread uniformly over the histogram.

Thereafter, an image is obtained under the changed image-taking conditions (Step S28). The image thus obtained is outputted to the image processor 17 (Step S29). As it is received by the image processor 17 (Step S33), it is outputted to another image processing component for edge detection and other processes (Step S34).

Thus, on the automobile to which a front image taking device 1 of this invention is mounted, the position of each obstacle can be accurately detected by the laser radar 12, corrections are made by predicting its position at the time of the next scan and preliminarily taking an image to obtain optimum image-taking conditions and an image is obtained under these optimum conditions approximately at the same time as the laser scan. Thus, although the position of the obstacle may be changing, an optimum image-taking condition can be set according to the conditions of the obstacle.

## Claims

1. A front image taking device comprising:
a camera (11) for taking an image of a front area of an automobile;
a laser scan device (12) for scanning said front area with laser light to detect obstacles; **characterized by**
said camera (11) being adapted to a selection of a plurality of specified areas out of an image-taking range and to a setting of individual image-taking conditions for said specified areas,
a camera controller (16) adapted to set an image-taking area individually for each obstacle detected by said laser scan device and to set image-taking conditions individually for each of said image-taking areas.

2. The front image taking device according to claim 1, wherein said laser (12) scan device is adapted to measure distance an direction to each detected obstacle; and
wherein said camera controller (16) is adapted to set said image-taking area according to the distance and the direction to the detected obstacle.

3. The front image taking device according to claim 1 or 2, wherein said laser scan device (12) is adapted to determine relative displacement of each detected obstacle based on results of previous scan and present scan; and
wherein said camera controller (16) is adapted to estimate position of the detected obstacle at the next time of taking image based on the relative displacement determined by said laser scan device (12), to set said image-taking area based on said estimated position and to set the shutter speed of said camera for said image-taking area according to the speed of motion of the detected obstacle.

4. The front image taking device according to any of the preceding claims, wherein said camera controller (16) is adapted to take a preliminary image of said image-taking area before the next time of taking image and to set sensitivity or brightness for said image-taking area based on results of said preliminary image.

## Patentansprüche

1. Frontbildaufnahmevorrichtung, welche aufweist:
eine Kamera (11) zur Aufnahme eines Bildes eines Frontgebiets eines Automobils;
eine Laserabtastvorrichtung (12) zur Abtastung des Frontgebiets mit Laserlicht zur Feststellung von Hindernissen; **gekennzeichnet**
**dadurch, dass** die Kamera (11) für eine Auswahl einer Anzahl von spezifizierten Gebieten aus einem Bildaufnahmebereich und eine Einstellung von individuellen Bildaufnahmebedingungen für die spezifizierten Gebiete eingerichtet ist,
durch eine Kamerasteuerung (16), die für eine Einstellung eines Bildaufnahmegebiets individuell für jedes mit der Laserabtastvorrichtung festgestelltes Hindernis und für eine Einstellung von Bildaufnahmebedingungen individuell für jedes der Bildaufnahmegebiete eingerichtet ist.

2. Frontbildaufnahmevorrichtung nach Anspruch 1, wobei die Laserabtastvorrichtung (12) für ein Messen von Abstand und Richtung zu jedem festgestellten Hindernis eingerichtet ist; und
wobei die Kamerasteuerung (16) für eine Einstellung des Bildaufnahmegebiets gemäß dem Abstand und der Richtung des festgestellten Hindernisses eingerichtet ist.

3. Frontbildaufnahmevorrichtung nach Anspruch 1 oder 2, wobei die Laserabtastvorrichtung (12) zur Bestimmung einer Relativversetzung eines jeden festgestellten Hindernisses beruhend auf Ergebnissen von vorheriger und gegenwärtiger Abtastung eingerichtet ist; und
wobei die Kamerasteuerung (16) für eine Abschätzung der Position des festgestellten Hindernisses beim nächsten Mal des Aufnehmens eines Bildes beruhend auf der mit der Laserabtastvorrichtung (12) bestimmten Relativversetzung, für eine Einstellung des Bildaufnahmegebiets beruhend auf der abgeschätzten Position und für eine Einstellung der Verschlussgeschwindigkeit der Kamera für das Bildaufnahmegebiet gemäß der Bewegungsgeschwindigkeit des festgestellten Hindernisses eingerichtet ist.

4. Frontbildaufnahmevorrichtung nach einem der vorstehenden Ansprüche, wobei die Kamerasteuerung (16) für die Aufnahme eines vorläufigen Bildes des Bildaufnahmegebiets vor dem nächsten Mal des Aufnehmen eines Bildes und für eine Einstellung der Empfindlichkeit oder Helligkeit für das Bildaufnahmegebiet beruhend auf Ergebnissen des vorläufigen Bildes eingerichtet ist.

## Revendications

1. Dispositif de prise d'images de devant comprenant :
◆ un appareil photo (11) destiné à prendre une image d'une zone avant d'une automobile ;
◆ un dispositif de balayage laser (12) destiné à balayer ladite zone avant avec une lumière laser afin de détecter des obstacles ; **caractérisé par**
◆ ledit appareil photo (11) étant adapté à une sélection d'une pluralité de zones spécifiées sur une plage de prise d'images et à un ensemble de conditions de prise d'images individuelles pour lesdites zones spécifiées,
◆ un contrôleur d'appareil photo (16) adapté afin de définir une zone de prise d'images individuellement pour chaque obstacle détecté par ledit dispositif de balayage laser et de définir des conditions de prise d'images individuellement pour chacune desdites zones de prise d'images.

2. Dispositif de prise d'images de devant selon la revendication 1, dans lequel ledit dispositif de balayage laser (12) est adapté afin de mesurer la distance et la direction par rapport à chaque obstacle détecté ; et dans lequel ledit contrôleur d'appareil photo (16) est adapté afin de définir ladite zone de prise d'images selon la distance et la direction par rapport à l'obstacle détecté.

3. Dispositif de prise d'images de devant selon la revendication 1 ou 2, dans lequel ledit dispositif de balayage laser (12) est adapté afin de déterminer le déplacement relatif de chaque obstacle détecté sur la base des résultats du balayage précédent et du balayage actuel ; et dans lequel ledit contrôleur d'appareil photo (16) est adapté afin d'estimer la position de l'obstacle détecté lors de la prise d'images suivante sur la base du déplacement relatif déterminé par ledit dispositif de balayage laser (12), de définir ladite zone de prise d'images sur la base de ladite position estimée et de définir la vitesse d'obturation dudit appareil photo pour ladite zone de prise d'images selon la vitesse de mouvement de l'obstacle détecté.

4. Dispositif de prise d'images de devant selon l'une quelconque des revendications précédentes, dans lequel ledit contrôleur d'appareil photo (16) est adapté afin de prendre une image préliminaire de ladite zone de prise d'images avant la prise d'images suivante et de définir la sensibilité ou la luminosité pour ladite zone de prise d'images sur la base des résultats de ladite image préliminaire.
